# EUROPÄISCHE PATENTSCHRIFT

(11) **EP 2 297 242 B1**
(45) Veröffentlichungstag und Bekanntmachung des Hinweises auf die Patenterteilung: **04.01.2012**
(21) Anmeldenummer: 09772533.7
(22) Anmeldetag: 03.07.2009
(51) Int. Cl.: C08L 23/00, C08L 101/00

(54) **VERFAHREN ZUR HOMOGENEN EINARBEITUNG VON POLYMERPARTIKELN IN POLYMERE MATRICES**
METHOD FOR HOMOGENEOUS INCORPORATION OF POLYMER PARTICLES INTO POLYMER MATRICES
PROCÉDÉ D'INCORPORATION HOMOGÈNE DE PARTICULES POLYMÈRES DANS DES MATRICES POLYMÈRES

(30) Priorität: 04.07.2008 EP 08159697
(43) Veröffentlichungstag der Anmeldung: 23.03.2011
(73) Patentinhaber: BASF SE, 67056 Ludwigshafen (DE)
(72) Erfinder: DYLLICK-BRENZINGER, Rainer, 67435 Neustadt (DE); GLASER, Alban, 68199 Mannheim (DE); NOZARI, Samira, 68161 Mannheim (DE)
(86) Internationale Anmeldenummer: PCT/EP2009/058395
(87) Internationale Veröffentlichungsnummer: WO 2010/000833

(56) Entgegenhaltungen:
- EP-A2- 1 110 999
- EP-A2- 1 191 041
- WO-A1-2004/037867
- WO-A1-2006/094526
- WO-A2-99/40123
- WO-A2-2004/046234
- WO-A2-2006/094978
- DE-A1- 19 628 143
- US-A1- 2003 199 628

## Beschreibung

Die Erfindung betrifft eine Präparation in der Polymerpartikel vorliegen, wobei die Polymerpartikel mindestens einen Effektstoff enthalten, die dadurch erhältlich sind, dass mittels einer, in Gegenwart eines mit Wachs nicht mischbaren Lösungsmittels durchgeführten Miniemulsionspolymerisation mindestens ein Effektstoff in Polymerpartikeln verteilt wird und die so erhaltene Polymerpartikel-Dispersion in ein Wachs durch Phasentransfer eingearbeitet.

Die Erfindung betrifft weiterhin eine Zusammensetzung, umfassend eine polymere Matrix, in der im wesentlichen homogen verteilt Polymerpartikel vorliegen, wobei die Polymerpartikel mindestens einen Effektstoff enthalten, dadurch erhältlich, dass die oben beschriebene Präparation anschließend in eine polymere Matrix eingearbeitet wird.

Die Erfindung betrifft weiterhin ein Verfahren zur Herstellung einer oben beschriebenen Präparation.

Die Erfindung betrifft weiterhin ein Verfahren zur Herstellung einer oben beschriebenen Zusammensetzung.

Darüber hinaus betrifft die Erfindung unter Verwendung der oben beschriebenen Zusammensetzung erhältliche Folien, Fasern und Formteile.

Bevorzugte Ausführungsformen sind der Beschreibung und den Ansprüchen sowie den Beispielen zu entnehmen.

Kombinationen von bevorzugten Ausführungsformen verlassen nicht den Rahmen der Erfindung.

Präparationen und Zusammensetzungen enthaltend mindestens einen Effektstoff enthaltende Polymerpartikel und deren Herstellung sind an sich bekannt. So werden beispielsweise UV-Absorber enthaltende Polymerpartikel in Kunststoffe eingearbeitet, um diese gegen UV-Strahlung zu schützen. Ebenso können aber auch andere, an sich mit Kunststoffen schlecht mischbare Substanzen in Polymerpartikeln verteilt werden, um dadurch eine migrationsstabile Verteilung im Kunststoff sicherzustellen.

DE 103 35 863 befasst sich mit einem kontinuierlichen Verfahren zur Herstellung eines Pigment-Masterbatches durch Extrusion, wobei die Pigmente in Form einer Dispersion oder eines Presskuchens in ein geschmolzenes Polymer gegeben und mittels Scherkräften eingearbeitet werden. Der so hergestellte Pigment-Masterbatch steht für eine spätere Einarbeitung in polymere Matrizes zur Verfügung.

In US 2003/0199628 wird ein wässriges Additiv-System für polymere Matrizes beschrieben. Dabei werden zum Beispiel Schlagzähmodifier und gegebenenfalls weitere Komponenten wie UV-Absorber enthaltende Polymerpartikel mittels Emulsionspolymerisation hergestellt. Diese können als wässrige Suspension oder als feuchter Presskuchen direkt in eine polymere Matrix eingearbeitet oder als Pulvermischung zusammen mit anderen Effektstoffen gegeben werden, welche dann in die polymere Matrix eingearbeitet werden. Die WO 2004/046234 beschreibt die Herstellung von UV-Absorber enthaltenden Polymerpartikeln mittels Miniemulsionspolymerisation. Die so erhaltenen Polymerpartikel werden eingesetzt zur Stabilisierung von Kunststoffen gegen UV-Strahlung, wobei allgemein auf verschiedene, dem Fachmann an sich bekannte Verfahren zur Einarbeitung der Polymerpartikel in die polymere Matrix verwiesen wird. Beispielsweise kann die Zugabe zu einer polymeren Matrix durch Einarbeitung der Polymerpartikel in eine Präparation und der anschließenden Zugabe dieser Präparation zur polymeren Matrix erfolgen.

In SE 7909585 wird ein Verfahren beschrieben zur Herstellung von Masterbatchen durch das Einarbeiten wässriger Pigmentpresskuchen oder anderer Zusatzstoffe in einen organischen Träger, namentlich einen Polybuten enthaltenden organischen Träger. Diese Masterbatche werden anschließend in verschiedene polymere Matrices eingearbeitet.

Die homogene Einarbeitung von Effektstoffen in polymere Matrices ist wirtschaftlich vorteilhaft, da eine qualitative Verbesserung der aus den polymeren Matrices hergestellten Produkte erzielt wird. Bei inhomogenen Einarbeitungen, bei denen die Effektstoffe agglomerieren müssen größere Mengen Effektstoffe in eine polymere Matrix eingearbeitet werden, um den gleichen Effekt zu erzielen wie bei einer homogenen Einarbeitung. Eine Methode für die besonders problematische homogene Einarbeitung von Effektstoffen in polymere Matrices, mit denen diese schlecht mischbar sind, wird in WO 2004/046234 beschrieben. Hier werden Effektstoffe in Polymerpartikel verteilt, die sich ihrerseits mit der polymeren Matrix mischen lassen.

Aufgabe der vorliegenden Erfindung war es daher Präparationen zur Verfügung zu stellen, die Polymerpartikel enthalten, wobei die Polymerpartikel mindestens einen Effektstoff enthalten sowie Zusammensetzungen zur Verfügung zu stellen, die diese Polymerpartikel im wesentlichen homogen verteilt enthalten, die unter Verwendung dieser Präparationen hergestellt wurden.

Diese Aufgabe wurde gelöst durch das zur Verfügung stellen von Präparationen, die Polymerpartikel enthalten, wobei die Polymerpartikel mindestens einen Effektstoff enthalten sowie durch Zusammensetzungen, in denen diese Polymerpartikel im wesentlichen homogen verteilt vorliegen, die dadurch erhältlich sind, dass
a) mittels einer, in Gegenwart eines mit Wachs nicht mischbaren Lösungsmittel durchgeführten Miniemulsionspolymerisation mindestens ein Effektstoff in einem Polymer A verteilt wird,
b) die so erhaltene Polymerpartikel-Dispersion in ein Wachs durch Phasentransfer eingearbeitet,
c) das so erhaltene Wachs als Präparation verwendet wird die
d) anschließend in eine polymere Matrix eingearbeitet wird.

Die unter c) erhaltene Präparation kann vor der Weiterverarbeitung optional getrocknet und pulverisiert werden oder das noch feuchte Produkt bei Temperaturen über dem Siedepunkt des mit Wachs nicht mischbaren Lösemittels in eine polymere Matrix eingearbeitet werden.

In einer Ausführungsform der erfindungsgemäßen Zusammensetzung enthält die polymere Matrix ein Polyolefin.

In einer weiteren Ausführungsform der erfindungsgemäßen Zusammensetzung ist mindestens ein Effektstoff ein UV-Absorber oder ein HALS (hindered amine light stabilizer). In einer weiteren Ausführungsform der erfindungsgemäßen Zusammensetzung hat das Wachs eine Molmasse von 500 bis 50000, bevorzugt 1000 bis 20 000 und insbesondere bevorzugt 2 000 bis 10 000.

Die in der erfindungsgemäßen Zusammensetzung vorliegenden Polymerpartikel sind durch Miniemulsionspolymerisation erhältlich.

Bevorzugte polymere Matrices, in die die mindestens einen Effektstoff enthaltenden erfindungsgemäßen Polymerpartikel eingearbeitet werden, sind im erfindungsgemäßen Verfahren Polyolefine, Polyester, PVC, Polycarbonate, Polyamide, Polyurethan, Polymethylmethacrylat (PMMA), Polystyrol oder Copolymere der vorgenannten Polymere. Ebenso können Mischungen unterschiedlicher vorgenannter Polymere die polymere Matrix bilden. Besonders bevorzugt handelt es sich bei der polymeren Matrix um ein Polyolefin enthaltendes Polymer oder um PVC. In einem ganz besonders bevorzugten Verfahren ist die polymere Matrix ein Polyolefin. In einem insbesondere bevorzugten Verfahren ist die polymere Matrix ein Polyethylen, zum Beispiel ein Low Density Polyethylen (LDPE).

Der Begriff "im wesentlichen homogene Verteilung" bedeutet in der vorliegenden Anmeldung, dass die Polymerteilchen gleichmäßig und einheitlich in der gesamten Präparation und der polymeren Matrix verteilt sind, d.h. dass die einzelnen Polymerpartikel nicht agglomeriert vorliegen, sondern getrennt voneinander. Eine Verteilung der Polymerteilchen in der polymeren Matrix von LDPE ist beispielsweise als "im wesentlichen homogen" im Sinne dieser Erfindung anzusehen, wenn weniger als 10 %, bevorzugt weniger als 5 % der Polymerpartikel einen geringeren Abstand zum nächstliegenden Polymerpartikel von mindestens 50 nm, bevorzugt mindestens 100 nm, weiter bevorzugt mindestens 250 nm und insbesondere bevorzugt mindestens 500 nm hat.

Die Verteilung der Partikel lässt sich beispielsweise mit Hilfe der konfokalen Laser Rastermikroskopie überprüfen. Die Methode wird beispielsweise in "Confocal and Two-Photon Microscopy", edited by Alberto Diaspro; ISBN 0-471-40920-0, Wiley-Liss, a John Wiley & Sons, Inc. Publication, in Kapitel 2, Seiten 19-38, und den darin enthaltenen Zitaten beschrieben.

Die in der erfindungsgemäßen Zusammensetzung eingearbeiteten Dispersionen von mindestens einen Effektstoff enthaltenden Polymerteilchen werden mittels Miniemulsionspolymerisation hergestellt.

Die Herstellung von Miniemulsionen ist an sich bekannt und wird allgemein beschrieben in Landfester, K. (2001) Macromolecular Rapid Communication, Vol. 22, Seiten 896 - 936 und in WO 2004/037867. Hierunter werden besonders feinteilige Emulsionen von hydrophoben Monomeren in Wasser verstanden. Die Teilchengröße der in der wässrigen Phase emulgierten Monomeren liegt im Nanometer-Bereich, z.B. bei 5 bis 500 nm. Um beispielsweise eine Miniemulsion von Styrol in Wasser herzustellen, läßt man zur Homogenisierung auf eine Mischung aus Styrol, einem oberflächenaktiven Mittel wie Natriumdodecylsulfat und einem hydrophoben Bestandteil wie Hexadecan oder Olivenöl, Ultraschall einwirken. Man erhält auf diese Weise stabile Miniemulsionen von Styrol und Hydrophob in Wasser mit einem mittleren Tropfendurchmesser der emulgierten Ölphase von beispielsweise 78 bis 102 nm, vgl. K. Landfester, Macromol. Rapid Commun. Vol. 22, 896 - 936 (2001). Diese Emulsionen können im Idealfall unter Erhalt der Tropfengröße der emulgierten Monomertröpfchen zu Polymerlatices polymerisiert werden. Bei der Miniemulsionspolymerisation ist es möglich, wasserunlösliche Verbindungen wie Alkydharze oder Pigmente in die entstehenden Latices einzuarbeiten.

Das wesentliche Merkmal der Miniemulsionspolymerisation besteht darin, dass man eine organische Phase besonders feinteilig in einer wässrigen Phase verteilt, die ein oberflächenaktives Mittel sowie ein Hydrophob zur Stabilisierung der Miniemulsion enthält. Der mittlere Tropfendurchmesser der in der wässrigen Phase emulgierten Tropfen liegt beispielsweise in dem Bereich von 50 bis 500 nm, vorzugsweise 50 bis 200 nm und insbesondere bei 50 bis 100 nm. Selbstverständlich kann der mittlere Tropfendurchmesser der in der wässrigen Phase emulgierten Tropfen auch kleiner als 100 nm sein, jedoch nicht kleiner als 10 nm. Bei der Miniemulsionspolymerisation ändert sich die Teilchengröße der emulgierten Teilchen bzw. Tröpfchen während der Polymerisation im Idealfall praktisch nicht, so dass die mittlere Teilchengröße der Polymeren, die in den wässrigen Polymerdispersionen vorliegen, ebenfalls in dem für die emulgierte organische Phase angegebenen Bereich liegt. Neben der reinen Miniemulsionspolymerisation wird in der Praxis als Konkurrenzreaktion auch eine Emulsionspolymerisation beobachtet. Die Molmassen der Polymeren sind ähnlich wie die bei der Emulsionspolymerisation im Bereich von 0,3 bis 10 Mio. Dalton.

Derart kleine Teilchengrößen von höchstens 500 nm erreicht man, wenn man die zur Herstellung der Emulsion eingesetzte organische Phase mit Hilfe mechanischer Emulgierverfahren emulgiert. Solche Verfahren sind bekannt. Sie werden beispielsweise ausführlich beschrieben von H. Schubert et al., in "Mischen und Rühren - Grundlagen und moderne Verfahren für die Praxis", VDI-Tagung, 23./24.11.1988, Baden-Baden, unter "Neue Entwicklungen auf dem Gebiet der Emulgiertechnik". Bei den mechanischen Emulgierverfahren werden als Apparaturen beispielsweise Hochddruckhomogenisatoren, Ultraschall erzeugende Vorrichtungen, Microfluidizer, Rotor-Stator-Apparate, Taylor-Reaktoren, Cuette-Zellen, Strahldüsen und mit Membrantechnik arbeitende Apparaturen eingesetzt. Das wesentliche Prinzip dieser Vorrichtungen beruht darauf, dass in ihnen kurzfristig hohe Scherfelder aufgebaut werden. Das Emulgieren der organischen Phase in der wässrigen Phase erfolgt vorzugsweise mit Hilfe von Ultraschall erzeugenden Vorrichtungen oder mit Hilfe von Hochdruckhomogenisatoren.

Geeignete hydrophobe monoethylenisch ungesättigte Monomere, die nach Art einer Miniemulsionspolymerisation polymerisiert werden können, sind beispielsweise Monomere aus der Gruppe Styrol, Methylstyrol, C₂- bis C₂₈-Olefine, Ester aus monoethylenisch ungesättigten Carbonsäuren mit 3 bis 5 C-Atomen und einwertigen Alkoholen mit 1 bis 22 C-Atomen, Vinylester von C₁- bis C₂₂-Carbonsäuren, bevorzugt von C₁- bis C₁₈-Carbonsäuren, Vinylether von C₁- bis C₃₀-Alkoholen, Acrynitril und Methacrylnitril. Bevorzugt verwendete Monomere aus dieser Gruppe sind Styrol, Methylmethacrylat, n-Butylacrylat, Isobutylacrylat,tert.-Butylacrylat und Acrylnitril oder Mischungen dieser Monomeren. Die hydrophoben Monomeren können zur Modifizierung der Eigenschaften der entstehenden Polymerdispersionen gegebenenfalls zusammen mit geringen Mengen an hydrophilen Monomeren eingesetzt werden. Die hydrophilen Monomeren werden jedoch höchstens in einer solchen Menge eingesetzt, dass die entstehenden Copolymerisate in Wasser bei einer Temperatur von 20°C und einem pH von 2 eine Löslichkeit von höchstens 50 g/l, bevorzugt von höchstens 10 g/l, insbesondere 1 g/l haben. Geeignete hydrophile Verbindungen gehören beispielsweise zu der Gruppe der ethylenisch ungesättigten Carbonsäuren mit 3 bis 5 C-Atomen, Acrylamid, Methacrylamid,N-Vinylformamid, N-Vinylpyrrolidon, N-Vinylimidazol, Vinylether, 2-Acrylamido-2-methylpropansulfonsäure, Vinylsulfonsäure, Styrolsulfonsäure, Sulfopropylacrylat, Sulfopropylmethacrylat, Fumarsäure, Maleinsäure, Itaconsäure und/oder Maleinsäureanhydrid.

Bevorzugte hydrophile Monomere sind beispielsweise Acrylsäure, Methacrylsäure, 2-Acrylamido-2-methylpropansulfonsäure, Vinylsulfonsäure, Maleinsäureanhydrid und/oder Maleinsäure.

Dem Fachmann ist an sich eine Vielzahl von Effektstoffen bekannt, die in eine polymere Matrix eingearbeitet werden können. In den erfindungsgemäßen mindestens einen Effektstoff enthaltenden Polymerteilchen können beliebige Effektstoffe enthalten sein, beispielsweise UV-Absorber, organische Farbstoffe, die Licht im sichtbaren Bereich absorbieren, IR-Absorber, optische Aufheller, Stabilisatoren und Hilfsmittel für organische Polymere, Antioxidantien für Polymere, Antibeschlagsmittel (Antifogging Agents) für Polymere, Gleitmittel für Polymere, Antistatika für Polymere, Flammschutzmittel für Polymere, Reaktivleimungsmittel für Papier, Pharmawirkstoffe, Biozide und Agrowirkstoffe und Kombinationen von zwei oder mehr solcher Effektstoffe. Die in Betracht kommenden Effektstoffe sind in den ethylenisch ungesättigten Monomeren löslich, teillöslich oder auch leicht dispergierbar.

Bevorzugt werden als Effektstoffe UV-Absorber eingesetzt. Eine Liste möglicher UV-Absorber ist beispielsweise in WO2004/046234 zu finden.

Unter UV-Absorbern werden bekanntlich UV-Strahlen absorbierende Verbindungen verstanden, die die absorbierte Strahlung strahlungslos deaktivieren. UV-Absorber absorbieren Licht der Wellenlänge < 400 nm und wandeln es in Wärmestrahlung um. Solche Verbindungen werden beispielsweise in Sonnenschutzmitteln und zur Stabilisierung von organischen Polymeren eingesetzt. Beispiele für UV-Absorber sind Derivate der p-Aminobenzoesäure, insbesondere deren Ester z.B. 4-Aminobenzoesäureethylester und ethoxylierte 4-Aminobenzoesäureethylester, Salicylate, substituierte Zimtsäureester (Cinnamate) wie Octyl-p-methoxycinnamat und 4-Isopentyl-4-methoxycinnamat, 2-Phenylbenzimidazol-5-sulfonsäure und ihre Salze. Ein besonders bevorzugt eingesetzter UV-Absorber ist 4-n-Octyloxy-2-hydroxi-benzophenon.

Weitere Beispiele für UV-Absorber sind: substituierte Acrylate, wie z.B. Ethyl- oder Isooctyl- a -cyano-ß,ß-diphenylacrylat (hauptsächlich 2-Ethylhexyl-α-cyano-ß,ß-diphenylacrylat Methyl-α-methoxycarbonyl-ß-phenylacrylat, Methyl-α-methoxycarbonyl-ß-(p-methoxyphenyl)acrylat, Methyl- oder Butyl-α-cyano-ß-methyl-ß-(p-methoxyphenyl)acrylat, N-(ß-methoxycarbonyl-ß-cyanovinyl)-2-methylindolin, Octyl-p-methoxycinnamat, Isopentyl-4-methoxycinnamat, Urocaninsäure und deren Salze und Ester; 2-Hydroxybenzophenonderivative, wie z.B. 4-Hydroxy-, 4-Methoxy-, 4-Octyloxy-, 4-Decyloxy-, 4-Dodecyloxy-, 4-Benzyloxy-, 4,2',4'- Trihydroxy-, 2'-Hydroxy-4,4'-dimethoxy-2-hydroxybenzophenon sowie 4-Methoxy-2-hydroxybenzophenon-Sulfonsäure-Natriumsalz; Ester der 4,4-Diphenylbutadien-1,1-dicarbonsäure, wie z.B. der Bis(2-ethylhexyl)ester; 2-Phenylbenzimidazol-4-sulfonsäure sowie 2-Phenylbenzimidazol- 5-sulfonsäure und deren Salze;

Derivate von Benzoxazolen; Derivate von Benztriazolen und 2-(2'-Hydroxyphenyl)benztriazolen, wie z.B. 2-(2H-Benztriazol-2-yl)-4-methyl-6-(2-methyl-3 ((1,1,3,3-tetramethyl-1-(trimethylsilyloxy)disiloxanyl)-propyl)- phenol, 2-(2'-Hydroxy-5'-methylphenyl)benztriazol, 2-(3',5'-Di-tert.-butyl-2'-hydroxyphenyl)benztriazol, 2-(5'-tert.-Butyl-2'- hydroxyphenyl)benztriazol, 2-[2'-Hydroxy-5'-(1,1 ,3,3-tetramethylbutyl)phenyl]benztriazol, 2-(3',5'-Di-tert.-butyl-2'-hydroxyphenyl)-5-chlorbenztriazol, 2-(3'-tert.-Butyl-2'-hydroxy-5'-methylphenyl)-5-chlorbenztriazol, 2-(3'-sec.-Butyl-5'-tert.-butyl- 2'-hydroxyphenyl)benztriazol, 2-(2'-Hydroxy-4'-octyloxyphenyl)benztriazol, 2-(3',5'-Di-tert.-amyl-2'-hydroxyphenyl)benztriazol, 2-[3',5'-Bis(α,α-dimethylbenzyl)-2'-hydroxyphenyl]benztriazol, tert.-Butyl-5'-(2-(2-ethylhexyloxy)-cartionylethyl)-2'-hydroxyphenyl]-5-chlorbenztriazol, 2[3'-tert.-Butyl-2'-hydroxy-5'-(2-methoxtriazol 2-[3'-tert.-Butyl-2'-hydroxy-5'-(2-methoxycarbonylethyl)phenyl]benztriazol 2-[3'-tert.-Butyl-2'-5hydroxy-5'-(2-octyloxycarbonylethyl)phenyl]benztriazol, 2-[3'-tert.-Butyl-5'-(2- (2-ethylhexyloxy)carbonylethyl)-2'-hydroxyphenyl]benztriazol, 2-(3'-Dodecyl-2'-hydroxy-5'-methylphenyl)benztriazol, 2-[3'- tert.-Butyl-2'-hydroxy-5'-(2-isooctyloxyrbonylethyl)-phenyl-benztriazol, 2,2'-Methylen-bis[4-(1,1,3,3-tetramethylbutyl)-6- benztriazol-2-ylphenol],das vollveresterte Produkt von 2-[3'- tert.-Butyl-5'-(2-methoxycarbonylethyl)-2'-hydroxyphenyl]-2H-benztriazol mit Polyethylenglycol 300, [R-CH₂CH₂-COO(CH₂)₃-]₂ mit R gleich 3'-tert.-Butyl-4-hydroxy-5'-2H-benztriazol-2-ylphenyl, 2-[2'-Hydroxy-3'-(α,α dimethylbenzyl)-5'-(1,1,'3,'3-tetramethylbutyl)phenyl]benztriazol, 2-[2'-Hydroxy-3'-(1,1,3,3-tetramethylbutyl)-5'-(α,α-dimethylbenzyl)phenyl]benztriazol; Benzylidencampher und seine Derivate, wie sie z. B. in der DE-A 3 836 630 genannt sind, z.B. 3-Benzylidencampher, 3(4'-Methylbenzyliden)d-1-campher;
α -(2-Oxoborn-3-yliden)toluol-4-sulfonsäure und ihre Salze, N,N,N-Trimethyl-4-(2-oxobom-3-ylidenmethyl)anilinium-methosulfat; Dibenzoylmethane, wie z.B. 4-tert.-Butyl-4'-methoxydibenzoylmethan; 2,4,6-Triaryltriazin-Verbindungen wie 2'4'6-Tris-{N-[4-(2-ethylhex-1-yl)oxycarbonylphenyl]aminol-1,3,5-triazin, 4'4'-((6- (((tert. Butyl)aminocarbonyl)phenylamino)-1,3,5-triazin-2,4- diyl)imino)bis(benzoesäure-2'-ethylhexylester); und 2-(2-Hydroxypheny1)-1,3,5-triazine, wie z.B. 2,4,6-Tris(2-hydroxy-4-octyloxyphenyl)1,3,5-triazin, 2-(2-Hydroxy-4-octyloxyphenyl)-4,6-bis(2,4-dimethylpheny1)-1,3,5- triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4- octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-Hydroxy-4-(2-hydroxy-3-butyloxypropyloxy)phenyl]-4,6-bis(2,4-dimethylphenyl)-1,3,5-triazin, 2-[2-Hydroxy-4-(2-hydroxy-3-octyloxypropyloxy)phenyl]-4,6-bis- (2,4-di-methylphenyl)-1,3,5-triazin, 2-(2-Hydroxy-4-tridecyloxyphenyl)-4,6-bis(2,4-dimethylphenyl)-1,3,5-triazin, 2-[4-(Dodecyloxy/tridecyloxy-2-hydroxypropoxy)-2-hdroxyphenyl]-4,6-bis(2,4- dimethylphenyl)-1,3,5-triazin, 2-[2-Hydroxy-4(2-hydroxy-3-dodecyloxypropoxy)phenyl]-4,6-bis-(2,4-dimethylphenyl)-1,3,5-triazin, 2-(2-Hydroxy-4-hexyloxyphenyl)-4,6-diphenyl-1,3,5-triazin, 2-(2- Hydroxy-4-methoxyphenyl)4,6-diphenyl-1,3,5-triazin, 2,4,6-Tris[2-hydroxy-4-(3-butoxy-2-hydroxypropoxy)phenyl]-1,3,5-triazin, 2-(2- Hydroxy-4-methoxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.

Weitere geeignete UV-Absorber kann man der Schrift Cosmetic Legislation, Vol.1, Cosmetic Products, European Commission 1999, S. 64-66 entnehmen, auf die hiermit Bezug genommen wird.

Geeignete UV-Absorber werden außerdem in den Zeilen 14 bis 30 auf Seite 6 der EP A-1 191 041 beschrieben.

Andere Effektstoffe sind organische Farbstoffe und optische Aufheller, die sich jeweils in ethylenisch ungesättigten Monomeren lösen und die selbst nicht polymerisierbar sind beziehungsweise die auch unter den Bedingungen der radikalischen Polymerisation nicht zerstört oder ungewandelt werden oder reaktiv sind. Solche Farbstoffe und optische Aufheller werden in der WO-A-99/40123, Seite 10, Zeile 14 bis Seite 25, Zeile 25 ausführlich beschrieben, auf die hier noch einmal ausdrücklich Bezug genommen wird. Während organische Farbstoffe ein Absorptionsmaximum im Wellenlängenbereich von 400 bis 850 nm besitzen, haben optische Aufheller ein oder mehrere Absorptionsmaxima im Bereich von 250 bis 400 nm. Optische Aufheller emittieren bekanntlich beim Bestrahlen mit UV-Licht eine Fluoreszenzstrahlung im sichtbaren Bereich. Beispiele für optische Aufheller sind Verbindungen aus den Klassen der Bisstyrylbenzole, Stilbene, Benzoxazole, Cumarine, Pyrene und Naphthaline. Handelsübliche optische Aufheller werden unter den Marken Tinopal® (Ciba), Ultraphor® (BASF Aktiengesellschaft) und Blankophor® (Bayer) verkauft. Optische Aufheller werden außerdem in Römpp, 10. Auflage, Band 4, 3028 - 3029 (1998) und in Ullmanns, Encyclopedia of Industrial Chemistry, Vol. 24, 363 - 386 (2003) beschrieben.

Als Effektstoffe kommen außerdem Stabilisatoren für organische Polymere in Betracht. Es handelt sich hierbei um Verbindungen, die Polymere gegen den Abbau bei Einwirkung von Sauerstoff, Licht oder Wärme stabilisieren. Solche Stabilisatoren werden auch als Antioxydantien oder als UV-und Lichtstabilisatoren bezeichnet, vgl. Ullmanns, Encyclopedia of Industrial Chemistry, Vol. 3, 629 - 650 (ISBN-3-527-30385-5) und EP-A-1 110 999, Seite 2, Zeile 29 bis Seite 38, Zeile 29. Mit solchen Stabilisatoren können praktisch alle organischen Polymeren stabilisiert werden, vgl. EP-A-1 110 999, Seite 38, Zeile 30 bis Seite 41, Zeile 35. Auch diese Literaturstelle wird durch die Bezugnahme zum Offenbarungsgehalt der vorliegenden Erfindung gemacht. Die in der EP-Anmeldung beschriebenen Stabilisatoren gehören zur Verbindungsklasse der Pyrazolone, der organischen Phosphite oder Phosphonite, der sterisch gehinderten Phenole und der sterisch gehinderten Amine (Stabilisatoren des sog. HALS Typs, vgl. Römpp, 10. Auflage, Band 5, Seiten 4206-4207. Handelsübliche Stabilisatoren und Hilfsmittel werden unter den Marken Tinuvin® und Cyasorb® von Ciba und Tenox® von Eastman Kodak vertrieben. Stabilisatoren und Hilfsmittel werden beispielsweise beschrieben in Plastic Additives Handbook, 5. Auflage, Hanser, ISBN 1-56990-295-X. Die Stabilisatoren und Hilfsmittel sind in ethylenisch ungesättigten Monomeren löslich, wobei sich mindestens 1 g/l, vorzugsweise mindestens 10 g/l bei einer Temperatur von 20°C und einem Druck von 1 bar lösen.

Weitere geeignete Effektstoffe sind IR-Farbstoffe, die beispielsweise von BASF Aktiengesellschaft als Lumogen® IR verkauft werden sowie Flammschutzmittel, die beispielsweise in Römpp, 10. Auflage, Seiten 1352 und 1353 sowie in Ullmanns, Encyclopedia of Industrial Chemistry, Vol. 14, 53-71 beschrieben werden. Die in Betracht kommenden Flammschutzmittel sind in ethylenisch ungesättigten Monomeren löslich.

Unter Effektstoffen sollen auch Alkenylbernsteinsäureanhydride verstanden werden, die beispielsweise als Masseleimungsmittel für Papier bekannt sind und in großem Umfang technisch verwendet werden. Beispiele für solche Leimungsmittel sind die isomeren 4-, 5-, 6-, 7- und 8-Hexadecenylbemsteinsäureanhydride, Decenylbemsteinsäureanhydrid, Octenylbernsteinsäureanhydrid, Dodecenylbemsteinsäureanhydrid und n-Hexadecenylbemsteinsäureanhydrid, vgl. auch C.E. Farley und R.B. Wasser, The Sizing of Paper, Second Edition, (3), Sizing With Alkenyl Succinic Anhydride, TAPPI PRESS, 1989, ISBN 0-89852-051-7.

Als Effektstoffe können außerdem alle Pharmawirkstoffe eingesetzt werden, die in ethylenisch ungesättigten Monomeren löslich, teillöslich oder dispergierbar sind. Eine Übersicht über Pharmawirkstoffe findet man beispielsweise in Römpp, 10. Auflage, Band 4, Seite 3235 (ISBN-3-13-734910-9) und in Ullmanns, Encyclopedia of Industrial Chemistry, Vol. 25, 549 -579 (2003). Unter Pharmawirkstoffen sollen im vorliegenden Zusammenhang auch Vitamine verstanden werden. Vitamine sind in ethylenisch ungesättigten Monomeren löslich. Eine Zusammenfassung über Vitamine findet man beispielsweise in Römpp, 10. Auflage, Band 6, Seite 4877-4887 (1999) und in Ullmanns, Encyclopedia of Industrial Chemistry, Vol. 38, 109-294.

Weitere geeignete Effektstoffe sind Parfüme, vgl. Ullmanns, Encyclopedia of Industrial Chemistry, Vol. 14, 73-199, und Biozide, vgl. Ullmanns, Encyclopedia of Industrial Chemistry, Vol. 5, 269-280.

Die bei einer Miniemulsionspolymerisation entstehenden Polymerpartikel enthalten üblicherweise überwiegend den mindestens einen Effektstoff. Im erfindungsgemäßen Verfahren enthalten bevorzugt 90% der Polymerpartikel den mindestens einen Effektstoff, besonders bevorzugt 95%, ganz besonders bevorzugt 99%. Im am Meisten bevorzugten Verfahren enthalten mehr als 99% der Polymerpartikel den mindestens einen Effektstoff.

Im Allgemeinen liegen die Effektstoffe im Polymer verteilt vor, d.h. nicht chemisch gebunden. Die Effektstoffe können von dem Polymer umschlossen sein (Kem-Schale Teilchen) oder an der Außenseite des Polymerteilchens haften (Schale-Kern Teilchen). Bevorzugt liegen die Partikel als Kern-Schale Teilchen vor.

Nach Abschluss der Miniemulsionspolymerisation liegen die mindestens einen Effektstoff enthaltenden Polymerpartikel als Polymerdispersion im Lösungsmittel vor. Diese Dispersion kann direkt in das erfindungsgemäße Wachs eingearbeitet werden oder der Anteil an Lösungsmittel durch Einengung verringert werden. Unter dem Begriff der Dispersion kann im vorliegenden Verfahren auch ein Presskuchen verstanden werden, auch wenn im Allgemeinen kein Presskuchen verwendet wird. In einer bevorzugten Ausführungsform enthält die Dispersion bei der Einarbeitung in das Wachs zwischen 30 und 80 % Lösungsmittel, besonders bevorzugt enthalten die erfindungsgemäßen Dispersionen zwischen 50 und 70% Lösungsmittel.

Wachse, die üblicherweise für die Herstellung von Präparationen verwendet werden, sind dem Fachmann an sich bekannt. So können beispielsweise reine PE-Wachse (z.B. Luwax A) oder Copolymere auf Basis Ethylen, Vinylacetat und oder Meth-/Acrylsäure oder Meth-/Acrylester oder oxidierte PE-Wachse verwendet werden. Im erfindungsgemäßen Verfahren werden als Wachse bevorzugt oxidierte PE Wachse oder Copolymere auf Basis Ethylen und Vinylacetat eingesetzt, besonders bevorzugt ist das Wachs ein oxidiertes PE Wachs.

Die Einarbeitung von Dispersionen in Wachse erfolgt normalerweise in einem Mischapparat. Im erfindungsgemäßen Verfahren können als Mischapparate Batch-Kneter, Dispersionskneter aber auch Extruder mit Mischeinheiten sein. Besonders bevorzugt erfolgt die Einarbeitung der erfindungsgemäßen Dispersion in einem Batch-Kneter. Dabei ist die Temperatur der Knetmasse, das Verhältnis der Polymerdispersion zum Wachs, die eingebrachte Scherung und die Zeitdauer der Scherung von Bedeutung. Man kann bei der Einarbeitung der Polymerdispersion in das Wachs ein Temperaturprogramm fahren, wobei man bei etwas erhöhter Temperatur beginnt und anschließend die Temperatur absenkt, um die Viskosität der Masse zu erhöhen. Dadurch wird das Dispergierergebnis verbessert.

Bevorzugt geht man so vor, dass man das Wachs im Kneter zum Schmelzen bringt und dann die Dispersion in Portionen oder auf einmal zugibt. Dem Fachmann ist bekannt, dass die Temperatur so gewählt werden sollte, dass das Wachs schmilzt, die Polymerteilchen und die darin enthaltenen Effektstoffe dagegen nicht beeinträchtigt werden. Das Wachs kann aber auch als Schmelze in das Mischorgan eingebracht werden. Bevorzugt wird eine Temperatur von 50 bis 150 °C gewählt. Besonders bevorzugt liegt die Temperatur im Mischorgan zwischen 70 und 120 °C.

Den Transfer der Polymerpartikel aus der polaren (beispielsweise wässrigen Umgebung) in die unpolare Umgebung der Wachsphase erkennt man daran, dass sich Wasser abtrennt, welches je nach Temperatur in Form von flüssigen Tropfen oder aber als Wasserdampf der Knetmasse entweicht.

Durch den Phasenübergang der mindestens einen Effektstoff enthaltenden Polymerteilchen aus der Dispersion in das Wachs entsteht die erfindungsgemäße Präparation. Das Lösungsmittel kann auf verschiedene Weise von der Präparation getrennt werden. Es kann aus dem Mischorgan abgezogen oder verdampft werden oder die Präparation kann aus dem Mischorgan entfernt und anschließend getrocknet und optional gemahlen werden. Bevorzugt wird im erfindungsgemäßen Verfahren das Lösungsmittel durch Abkippen als Flüssigkeit entfernt.

Im Falle, dass die Entfernung des Lösungsmittels durch Verdampfen im Mischorgan erfolgt, ist es notwendig, im Mischorgan eine Temperatur zu wählen, die oberhalb des Siedepunktes des Lösungsmittels liegt. Gleichzeitig ist eine niedrige Temperatur im Verfahren des Einarbeitens der erfindungsgemäßen Dispersion in das Wachs wirtschaftlich vorteilhaft, da ein geringerer Energieeintrag erfolgen muss. Weiterhin sind niedrigere Temperaturen vorteilhaft für die Integrität der Polymerteilchen und der darin enthaltenen Effektstoffe. Dem Fachmann ist bekannt, dass die Siedetemperatur eines Lösungsmittels durch Unterdruck gesenkt werden kann. Im erfindungsgemäßen Verfahren liegt der Druck im Mischorgan zwischen 0,01 und 10 bar, bevorzugt liegt der Druck zwischen 0,1 und 1 bar.

Im erfindungsgemäßen Verfahren wird die Präparation nach dem Einarbeiten im Mischapparat gebrochen und zerkleinert und eventuell unter Vakuum getrocknet. Trocken bedeutet im erfindungsgemäßen Verfahren einen Lösungsmittelgehalt in der Präparation von weniger als 5%. Bevorzugt liegt der Lösungsmittelgehalt bei weniger als 0,5%.

Im Allgemeinen werden Präparationen zur vereinfachten Handhabung und Weiterverarbeitung zerkleinert. Dabei kann die Präparation granuliert, pelletiert oder pulverisiert werden. Im erfindungsgemäßen Verfahren wird sie bevorzugt pulverisiert.

Dem Fachmann ist bekannt, dass Verfahren kontinuierlich oder diskontinuierlich durchgeführt werden können. Auch das erfindungsgemäße Herstellen der Präparation kann kontinuierlich oder diskontinuierlich durchgeführt werden. Bevorzugt wird das Verfahren diskontinuierlich durchgeführt.

Präparationen werden normalerweise verwendet zur Einarbeitung von Effektstoffen in polymere Matrices. Die erfindungsgemäße Präparation wird im vorliegenden Verfahren verwendet, um die darin enthaltenen mindestens einen Effektstoff enthaltenden Polymerteilchen homogen in polymere Matrices einzuarbeiten. Die Einarbeitung in eine polymere Matrix kann beispielsweise in einem Schritt oder in mehreren Schritten erfolgen. Bevorzugt erfolgt die Einarbeitung in einem Schritt.

Die vorliegende Erfindung eines verbesserten Verfahrens zur homogenen Einarbeitung von Polymerpartikeln in polymere Matrices ermöglicht die Herstellung von Präparationen, Masterbatchen und daraus hergestellten polymeren Matrices mit deutlich verbesserter Verteilung der eingearbeiteten Partikel. Diese Verbesserung der Verteilung hat den Vorteil, dass die Menge der einzuarbeitenden mindestens einen Wirkstoff umfassenden Polymerpartikel in eine Präparation oder einen Masterbatch verringert werden kann und trotzdem an jeder Stelle der Präparation oder des Masterbatch eine effektive Menge des entsprechenden, einen oder mehrere Wirkstoffe umfassenden Polymerpartikel vorliegt.

### Beispiele:

### Beispiel 1

### Herstellung einer Polymerpartikeldispersion 1

216 g vollentsalztes Wasser, 0,27 g einer 15% igen Natriumlaurylsulfat-Lösung, sowie 13,5 g Pentaerythrittetraacrylat wurden unter Rühren (200 UpM) vorgelegt. Diese Emulsion wurde unter Rühren auf eine Temperatur von 80°C gebracht wonach man 82 g (Zulauf 1) einer Miniemulsion bestehend aus 256,5 g Methylmethacrylat, 13,5 Polyisobuten der Molmasse 1000, 68,45 g Uvinul® 3008, 5,4 g einer 15% igen wässrigen Lösung von Natriumlaurylsulfat und 476,4 g vollentsalztes Wasser zugab. Dann wurden 8,1 g (Zulauf 2) einer 2% igen wässrigen Natriumperoxodisulfat Lösung zugegeben. Der Rest der Miniemulsion 738,2 g wurde nun über einen Zeitraum von 60 Minuten zudosiert und es wurden weitere 30 Minuten nachgerührt. Danach wurde der Rest des Zulaufs 2 (126,9 g) innerhalb von 60 Minuten zudosiert und anschließend noch 1 h nachgerührt. Man kühlte auf Raumtemperatur (RT) ab, filtrierte die Polymerpartikeldispersion über einen 500 µm, bzw. einen 125 µm Filter, um das Koagulat zu bestimmen (3,5 g). Der Feststoff der Polymerpartikeidispersion lag bei 29,9 %. Diese Polymerpartikeldispersion wurde in den Beispielen 3 und 5 zur Herstellung der Präparationen verwendet.

### Beispiel 2

### Herstellung der Polymerpartikeldispersion 2

216 g vollentsalztes Wasser, 0,27 g einer 15% igen Natriumlaurylsulfat-Lösung, sowie 13,5 g Pentaerythrittetraacrylat wurden unter Rühren (200 UpM) vorgelegt. Diese Emulsion wurde unter Rühren auf eine Temperatur von 80°C gebracht wonach man 82 g (Zulauf 1) einer Miniemulsion bestehend aus 256,5 g Methylmethacrylat, 12,825 g Stearylacrylat, 68,45 g Uvinul® 3008, 5,4 g einer 15% igen wässrigen Lösung von Natriumlaurylsulfat und 476,4 g vollentsalztes Wasser zugab. Dann wurde 8,1 g (Zulauf 2) einer 2% igen wässrigen Natriumperoxodisulfat Lösung zugegeben. Der Rest der Miniemulsion 738,2 g (Zulauf 1) wurde nun über einen Zeitraum von 60 Minuten zudosiert und es wurden weitere 30 Minuten nachgerührt. Danach wurde der Rest des Zulaufs 2 (126,9 g) innerhalb von 60 Minuten zudosiert und anschließend noch 1 h nachgerührt. Man kühlte auf RT ab, filtrierte die Polymerpartikeldispersion über einen 500 µm, bzw. einen 125 µm Filter, um das Koagulat zu bestimmen (3,1 g). Der Feststoff wurde zu 30,6 % bestimmt. Diese Polymerpartikeldispersion wurde in den Beispielen 4 und 6 zur Herstellung der Präparationen verwendet.

### Beispiel 3

### Herstellung einer Präparation

In einem Labor-Kneter der Fa. Jahnke und Kunkel mit der Bezeichnung HKD 0.6 D 71741 wurden eine Mischung aus 83,3 g der Polymerpartikeldispersion 1 und 75 g Luwax EVA 3® (Polyethylen Wachs basierend auf einem polaren Ethylen/Vinylacetat Kopolymer, siehe BASF Technische Information TI/ES 1474 e Januar 2005) auf eine Temperatur von 90°C gebracht. Nach 3 h hatte sich klares Wasser abgetrennt, was ein Zeichen für den vollständigen Phasentransfer (Flush-Prozeß) der Polymerpartikel in das Wachs ist. Zunächst ließ man den Kneter abkühlen und entfernte dann das Wasser aus dem Kneter und zerlegte die erkaltete Masse. Nach dem Trocknen und Mahlen wurden 98 g einer pulverförmigen Präparation erhalten.

### Beispiel 4

### Herstellung einer Präparation

Analog wurde unter Verwendung der Polymerpartikeldispersion 2 verfahren. Dazu wurde wieder das Luwax EVA 3® Pulver verwendet.

### Beispiel 5

### Herstellung einer Präparation

Analog wurde unter Verwendung der Polymerpartikeldispersion 1 verfahren. Nun wurde aber anstelle des Luwax EVA 3® Pulver Luwax OA2® Pulver (hartes, oxidiertes Polyethylenwachs, vergleiche BASF Technische Information TI/ES 1098 e March 1991) verwendet.

### Beispiel 6

### Herstellung einer Präparation

Analog wurde unter Verwendung der Polymerpartikeldispersion 2 verfahren. Es wurde wieder das Luwax OA2® Pulver verwendet.

### Beispiel 7

### Herstellung einer PE Folie unter Verwendung der Präparation aus Beispiel 3

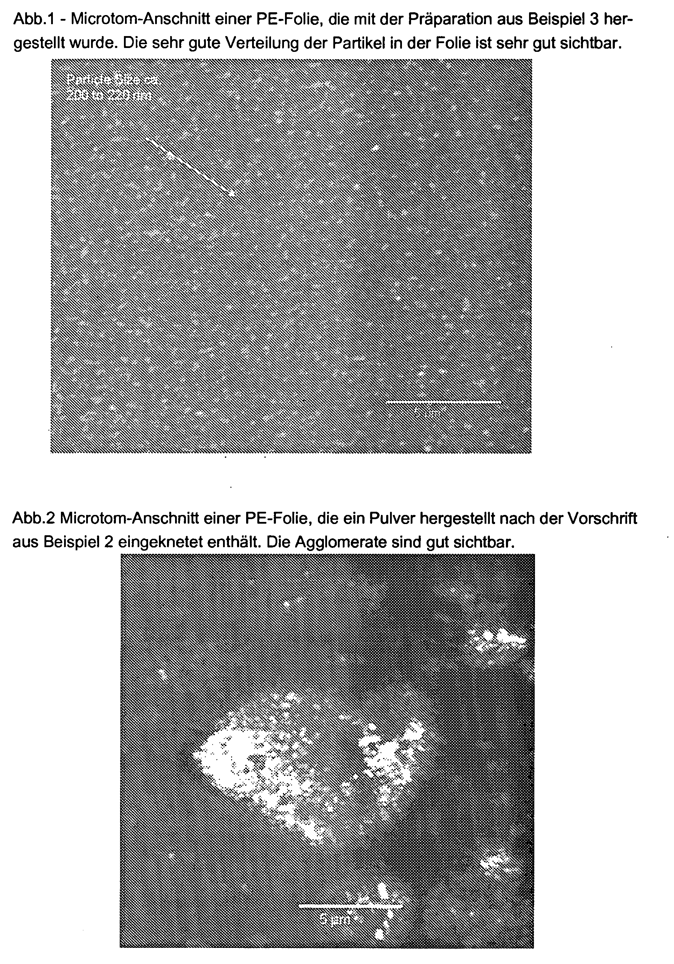

Ein Präparation hergestellt nach Beispiel 3 wurde in einem Extruder bei 190°C in Lupolen® 1840 D (Low Density Polyethylen mit einer Dichte von 0,919 g/cm² (ISO1183), siehe technische Information Basell vom 23.03.2004) eingeknetet und daraus wurde eine 100 µm Folie geblasen. Mit Hilfe der 2-Photonen Lasermikroskopie konnte der sehr gute disperse Zustand, d.h. die sehr gute Verteilung der Polymerpartikel im PE sehr gut visualisiert werden. Das in Abb. 1 gezeigte Bild verdeutlicht dies.

### Beispiel 8

Herstellung einer PE Folie unter Verwendung eines Polymerpulvers Als-Vergleichsbeispiel wurde ein sprühgetrocknetes Pulver hergestellt nach dem Verfahren des Beispiels 2 und anschließender Sprühtrocknung. In einem Extruder wurde dieses Pulver bei 190°C in Lupolen® 1840 D eingeknetet und daraus wurde eine 100 µm Folie geblasen. Mit Hilfe der 2-Photonen Lasermikroskopie konnte der schlechte disperse Zustand, d.h. die schlechte Verteilung der Polymerpartikel im PE sehr gut visualisiert werden. Das in Abb. 2 gezeigte Bild verdeutlicht dies.

## Patentansprüche

1. Präparation, umfassend ein Wachs, in dem Polymerpartikel vorliegen, wobei die Polymerpartikel mindestens einen Effektstoff enthalten, dadurch erhältlich, dass
a) mittels einer, in Gegenwart eines mit Wachs nicht mischbaren Lösungsmittels durchgeführten Miniemulsionspolymerisation mindestens ein Effektstoff in Polymerpartikeln verteilt wird,
b) die so erhaltene Polymerpartikel-Dispersion in ein Wachs durch Phasentransfer eingearbeitet wird.

2. Präparation nach Anspruch 1, worin mindestens ein Effektstoff ein UV-Absorber ist.

3. Präparation nach einem der Ansprüche 1 oder 2, **dadurch gekennzeichnet, dass** das Wachs eine Molmasse von 500 bis 50000 D hat.

4. Zusammensetzung, umfassend eine polymere Matrix, in der im wesentlichen homogen verteilt, Polymerpartikel vorliegen, wobei die Polymerpartikel mindestens einen Effektstoff enthalten, dadurch erhältlich, dass
a) mittels einer, in Gegenwart eines mit Wachs nicht mischbaren Lösungsmittel durchgeführten Miniemulsionspolymerisation mindestens ein Effektstoff in Polymerpartikeln verteilt wird,
b) die so erhaltene Polymerpartikel-Dispersion in ein Wachs durch Phasentransfer eingearbeitet und
c) das so erhaltene Wachs anschließend als Präparation in eine polymere Matrix eingearbeitet wird.

5. Zusammensetzung nach Anspruch 4, **dadurch gekennzeichnet, dass** die polymere Matrix ein Polyolefin enthält.

6. Zusammensetzung nach Anspruch 4 oder 5, worin mindestens ein Effektstoff ein UV-Absorber ist.

7. Zusammensetzung nach einem der Ansprüche 4 bis 6, **dadurch gekennzeichnet, dass** das Wachs eine Molmasse von 500 bis 50000 D hat.

8. Verfahren zur Herstellung einer Präparation, umfassend ein Wachs, in dem Polymerpartikel vorliegen, wobei die Polymerpartikel mindestens einen Effektstoff enthalten, dadurch erhältlich, dass
a) mittels einer, in Gegenwart eines mit Wachs nicht mischbaren Lösungsmittels durchgeführten Miniemulsionspolymerisation mindestens ein Effektstoff in Polymerpartikeln verteilt wird,
b) die so erhaltene Polymerpartikel-Dispersion in ein Wachs durch Phasentransfer eingearbeitet wird.

9. Verfahren nach Anspruch 8, worin mindestens ein Effektstoff ein UV-Absorber ist.

10. Verfahren nach einem der Ansprüche 8 oder 9, **dadurch gekennzeichnet, dass** das Wachs, eine Molmasse von 500 bis 50000 D hat.

11. Verfahren zur Herstellung einer Zusammensetzung, umfassend eine polymere Matrix, in der im wesentlichen homogen verteilt, Polymerpartikel vorliegen, wobei die Polymerpartikel mindestens einen Effektstoff enthalten, dadurch erhältlich, dass
a) mittels einer, in Gegenwart eines mit Wachs nicht mischbaren Lösungsmittel durchgeführten Miniemulsionspolymerisation mindestens ein Effektstoff in Polymerpartikeln verteilt wird,
b) die so erhaltene Polymerpartikel-Dispersion in ein Wachs durch Phasentransfer eingearbeitet und
c) das so erhaltene Wachs anschließend als Präparation in eine polymere Matrix eingearbeitet wird.

12. Verfahren nach Anspruch 11, **dadurch gekennzeichnet, dass** die polymere Matrix ein Polyolefin enthält.

13. Verfahren nach Anspruch 11 oder 12, worin mindestens ein Effektstoff ein UV-Absorber ist.

14. Verfahren nach einem der Ansprüche 11 bis 13, **dadurch gekennzeichnet, dass** das Wachs eine Molmasse von 500 bis 50000 D hat.

15. Folien, Fasern und Formteile erhältlich unter Verwendung der Zusammensetzungen gemäß einem der Ansprüche 4 bis 7.

## Claims

1. A preparation comprising a wax in which polymer particles are present, where the polymer particles comprise at least one effect substance, obtainable by
a) by means of a miniemulsion polymerization carried out in the presence of a wax-immiscible solvent, distributing at least one effect substance in polymer particles,
b) incorporating the polymer particle dispersion obtained in this way into a wax by phase transfer.

2. The preparation according to claim 1, in which at least one effect substance is a UV absorber.

3. The preparation according to one of claims 1 or 2, wherein the wax has a molar mass of from 500 to 50 000 D.

4. A composition comprising a polymeric matrix in which, in essentially homogeneous distribution, polymer particles are present, where the polymer particles comprise at least one effect substance, obtainable by
a) by means of a miniemulsion polymerization carried out in the presence of a wax-immiscible solvent, distributing at least one effect substance in polymer particles,
b) incorporating the polymer particle dispersion obtained in this way into a wax by phase transfer and
c) then incorporating the wax obtained in this way as preparation into a polymeric matrix.

5. The composition according to claim 4, wherein the polymeric matrix comprises a polyolefin.

6. The composition according to claim 4 or 5, in which at least one effect substance is a UV absorber.

7. The composition according to any one of claims 4 to 6, wherein the wax has a molar mass of from 500 to 50 000 D.

8. A process for preparing a preparation comprising a wax in which polymer particles are present, where the polymer particles comprise at least one effect substance, obtainable by
a) by means of a miniemulsion polymerization carried out in the presence of a wax-immiscible solvent, distributing at least one effect substance in polymer particles,
b) incorporating the polymer particle dispersion obtained in this way into a wax by phase transfer.

9. The process according to claim 8, in which at least one effect substance is a UV absorber.

10. The process according to one of claims 8 or 9, wherein the wax has a molar mass of from 500 to 50 000 D.

11. A process for preparing a composition comprising a polymeric matrix in which, in essentially homogeneous distribution, polymer particles are present, where the polymer particles comprise at least one effect substance, obtainable by
a) by means of a miniemulsion polymerization carried out in the presence of a wax-immiscible solvent, distributing at least one effect substance in polymer particles,
b) incorporating the polymer particle dispersion obtained in this way into a wax by phase transfer and
c) then incorporating the wax obtained in this way as preparation into a polymeric matrix.

12. The process according to claim 11, wherein the polymeric matrix comprises a polyolefin.

13. The process according to claim 11 or 12, in which at least one effect substance is a UV absorber.

14. The process according to any one of claims 11 to 13, wherein the wax has a molar mass of from 500 to 50 000 D.

15. A film, fiber or molding obtainable using the composition according to any one of claims 4 to 7.

## Revendications

1. Préparation, comprenant une cire, dans laquelle se trouvent des particules polymères, les particules polymères contenant au moins une substance conférant un effet, pouvant être obtenue en ce que
a) au moins une substance conférant un effet est répartie dans les particules polymères au moyen d'une polymérisation en mini-émulsion réalisée en présence d'un solvant non miscible avec la cire,
b) la dispersion de particules polymères ainsi obtenue est incorporée dans une cire par transfert de phases.

2. Préparation selon la revendication 1, au moins une substance conférant un effet étant un absorbant des UV.

3. Préparation selon l'une quelconque des revendications 1 ou 2, **caractérisée en ce que** la cire présente une masse molaire de 500 à 50 000 D.

4. Composition, comprenant une matrice polymère, dans laquelle se trouvent des particules polymères réparties de manière sensiblement homogène, les particules polymères contenant au moins une substance conférant un effet, pouvant être obtenue en ce que
a) au moins une substance conférant un effet est répartie dans les particules polymères au moyen d'une polymérisation en mini-émulsion réalisée en présence d'un solvant non miscible avec la cire,
b) la dispersion de particules polymères ainsi obtenue est incorporée dans une cire par transfert de phases et
c) la cire ainsi obtenue est ensuite incorporée sous forme de préparation dans une matrice polymère.

5. Composition selon la revendication 4, **caractérisée en ce que** la matrice polymère contient une polyoléfine.

6. Composition selon la revendication 4 ou 5, au moins une substance conférant un effet étant un absorbant des UV.

7. Composition selon l'une quelconque des revendications 4 à 6, **caractérisée en ce que** la cire présente une masse molaire de 500 à 50 000 D.

8. Procédé pour la confection d'une préparation, comprenant une cire, dans laquelle se trouvent des particules polymères, les particules polymères contenant au moins une substance conférant un effet, pouvant être obtenue en ce que
a) au moins une substance conférant un effet est répartie dans les particules polymères au moyen d'une polymérisation en mini-émulsion réalisée en présence d'un solvant non miscible avec la cire,
b) la dispersion de particules polymères ainsi obtenue est incorporée dans une cire par transfert de phases.

9. Procédé selon la revendication 8, au moins une substance conférant un effet étant un absorbant des UV.

10. Procédé selon l'une quelconque des revendications 8 ou 9, **caractérisé en ce que** la cire présente une masse molaire de 500 à 50 000 D.

11. Procédé pour la confection d'une composition, comprenant une matrice polymère, dans laquelle se trouvent des particules polymères réparties de manière sensiblement homogène, les particules polymères contenant au moins une substance conférant un effet, pouvant être obtenue en ce que
a) au moins une substance conférant un effet est répartie dans les particules polymères au moyen d'une polymérisation en mini-émulsion réalisée en présence d'un solvant non miscible avec la cire,
b) la dispersion de particules polymères ainsi obtenue est incorporée dans une cire par transfert de phases et
c) la cire ainsi obtenue est ensuite incorporée sous forme de préparation dans une matrice polymère.

12. Procédé selon la revendication 11, **caractérisé en ce que** la matrice polymère contient une polyoléfine.

13. Procédé selon la revendication 11 ou 12, au moins une substance conférant un effet étant un absorbant des UV.

14. Procédé selon l'une quelconque des revendications 11 à 13, **caractérisé en ce que** la cire présente une masse molaire de 500 à 50 000 D.

15. Feuilles, fibres et pièces façonnées pouvant être obtenues par l'utilisation des compositions selon l'une quelconque des revendications 4 à 7.
